# EUROPÄISCHE PATENTSCHRIFT

(11) **EP 3 469 859 B1**
(45) Veröffentlichungstag und Bekanntmachung des Hinweises auf die Patenterteilung: **03.11.2021**
(21) Anmeldenummer: 17729429.5
(22) Anmeldetag: 02.06.2017
(51) Int. Cl.: H05B 47/19, H04L 12/28, H04B 5/00

(54) **ADRESSZUWEISUNG UND KONFIGURIERUNG VON KOMPONENTEN EINES BELEUCHTUNGSSYSTEMS MITTELS TRANSPONDER**
ADDRESS ASSIGNMENT AND CONFIGURATION OF COMPONENTS OF A LIGHTING SYSTEM BY MEANS OF TRANSPONDERS
ATTRIBUTION D'ADRESSES ET CONFIGURATION DE COMPOSANTS D'UN SYSTÈME D'ÉCLAIRAGE AU MOYEN D'UN TRANSPONDEUR

(30) Priorität: 13.06.2016 DE 102016210414
(43) Veröffentlichungstag der Anmeldung: 17.04.2019
(60) Teilanmeldung: 21199281.3
(73) Patentinhaber: Zumtobel Lighting GmbH, 6850 Dornbirn (AT)
(72) Erfinder: MAYR, Gregor, 6974 Gaißau (AT); KLOCKER, Bernhard, 6850 Dornbirn (AT)
(74) Vertreter: Beder, Jens
(86) Internationale Anmeldenummer: PCT/EP2017/063457
(87) Internationale Veröffentlichungsnummer: WO 2017/215955

(56) Entgegenhaltungen:
- EP-A1- 2 704 365
- WO-A1-2006/016845
- DE-A1-102007 036 835
- DE-A1-102013 205 896

## Beschreibung

Die vorliegende Erfindung betrifft ein Beleuchtungssystem aufweisend zumindest eine Steuervorrichtung für eine Komponente eines Beleuchtungssystems und ein mobiles Sendegerät zur Adresszuweisung und/oder Konfigurierung der Steuervorrichtung und/oder der Komponente sowie ein Verfahren zum Übertragen von für die Steuerung oder Konfiguration der Komponente von einer Steuervorrichtung zu verwendenden Daten von einem mobilen Sendegerät zu der die Komponente steuernden Steuervorrichtung.

Beleuchtungssysteme können Komponenten wie Sensoren, Leuchtmittel oder Aktoren, Schaltern und Dimmer, aufweisen. Mit Hilfe von Betriebsgeräten für Leuchtmittel, wie Gasentladungslampen, Halogenlampen und insbesondere Leuchtdioden (LED), kann die Funktion der Leuchtmittel überwacht und können die Leuchtmittel gestartet und/oder gedimmt werden. Mittels Sensoren, welche z.B. Bewegungen von Objekten und/oder die Umgebungshelligkeit erfassen, können die Leuchtmittel bei An-/Abwesenheit einer Person automatisch ein-/ausgeschaltet werden bzw. das Dimmen der Leuchtmittel kann automatisch an die Umgebungshelligkeit angepasst werden.

Insbesondere Betriebsgeräte von Leuchten mit Leuchtdioden (LED) enthalten oft Steuereinrichtungen, welche Steuerdaten für die Einstellung von Betriebsparametern, wie zum Beispiel den maximalen Abgabestrom an die Leuchtdioden oder die Farbtemperatur, von außen empfangen können. In Beleuchtungssystemen, in denen die Komponenten zum Datenaustausch vernetzt sind, sind die Komponenten mit jeweils einer Steuereinrichtung verbunden, welche unter anderem den Datenaustausch während des Netzwerkbetriebs steuert und durch ihre eindeutige Zuordnung die Komponente im Netzwerk identifiziert.

Die US 2012/0306621 A1 offenbart eine Steuervorrichtung für eine in einem Beleuchtungssystem vernetzbare Komponente, die Daten an eine Schreibe- und Lesevorrichtung mittels eines Transponders drahtlos senden und empfangen kann. Der Transponder ist ein RFID (engl. radio-frequency identification)-Transponder, der mit einer Steuerungseinrichtung verbunden ist und eine von einer zentralen Steuereinheit auslesbare unverwechselbare Kennung (UID, user identification) aufweist. Diese Kennung wird dazu verwendet, die Komponenten bei der ersten Inbetriebnahme bzw. beim Einschalten des Beleuchtungssystems durch die zentrale Steuereinheit zu identifizieren, um ihnen automatisch Netzwerkadressen zuordnen zu können.

Bei dem Beleuchtungssystem besteht jedoch das Problem, dass die Adresszuweisung erst nach dem Einschalten des Beleuchtungssystems erfolgt und der Installateur/Anwender des Beleuchtungssystems bei der automatischen Verwendung der RFID-Adressen keinen Einfluss auf die zugeordneten Adressen hat, wenn ihm die Kennung (UID) der jeweiligen Komponente bzw. des Transponders unbekannt ist. Zudem kann eine Parametrierung und Konfiguration der Komponenten durch den Installateur nicht vor dem ersten Einschalten oder der Inbetriebnahme erfolgen.

Ein Beleuchtungssystem gemäß dem Oberbegriff des beigefügten Anspruches 1 ist in der EP 2704 365 A1 offenbart.

Die WO 2006/016845 A1 offenbart ein Lesegerät, mit dem eine Identifizierungs-Information aus einem Transponder einer Komponente eines Beleuchtungssystems ausgelesen und die Komponente mittels einer Datenbank, die jeder Identifizierungs-Information eine Identität zuordnet, identifiziert werden kann.

Eine Steuervorrichtung mit einem Transponder, der im ausgeschalteten Zustand der Steuervorrichtung von einem Sendegerät gesendet Daten empfängt und speichert und eine Steuerungseinrichtung, die die in dem Transponder gespeicherten Daten nach dem Einschalten der Steuervorrichtung ausliest, um sie für die Steuerung einer von der Steuervorrichtung zu steuernden Komponente zu verwenden, wird in der DE 10 2013 205 896 A1 beschrieben.

Der Erfindung liegt die Aufgabe zugrunde, eine Vorrichtung und ein Verfahren anzugeben, die die beschriebenen Probleme verringern. Aufgabe ist es insbesondere, ein Beleuchtungssystem und ein Verfahren bereitzustellen, mit denen in einfacher Weise ein grafisches Anlagenabbild des Beleuchtungssystems erstellt werden kann.

Diese Aufgabe wird gemäß den Merkmalen der unabhängigen Ansprüche gelöst. Die Erfindung wird durch die Merkmale der abhängigen Ansprüche weitergebildet.

Für alle Ausführungen im Zusammenhang mit der vorliegenden Erfindung wird einheitlich der Begriff des "Steuerns" verwendet. Dies umfasst aber auch sämtliche Formen der Regelung.

Gemäß der vorliegenden Erfindung kann die Steuervorrichtung und/oder die Komponente des Beleuchtungssystems bereits bei ihrer Montage im noch stromlosen Zustand durch den Monteur mittels dem mobilen Sendegerät konfiguriert werden, so dass die Komponente bzw. das Beleuchtungssystem mit dem ersten Einschalten sofort den regulären Betrieb aufnehmen kann. Die von dem mobilen Sendegerät gesendeten Daten beinhalten zumindest eine Adressierungs-Information, welche eine Netzwerkadresse anzeigt, mit der die Steuervorrichtung im Beleuchtungssystem zu identifizieren ist. Somit ist es möglich, dass der Monteur/Anwender zu vernetzenden Steuervorrichtungen des Beleuchtungssystems bereits bei ihrer Montage im stromlosen Zustand gewünschte Netzwerkadressen zuordnet, welche aus einem Montageplan hervorgehen.

Das mobile Sendegerät weist Mittel zum Bestimmen seiner Position und damit letztlich der Position der von der Steuervorrichtung zu steuernden Komponente auf und ist dazu ausgebildet, die Adressierungs-Information zusammen mit der bestimmten Position an den Transponder zu senden.

Zusätzlich können die Daten Informationen zur Konfiguration der Steuervorrichtung selbst und/oder Informationen zur Konfiguration der von der Steuervorrichtung zu steuernden Komponente beinhalten, wobei die Steuerungseinrichtung dazu ausgebildet sein kann, die Steuervorrichtung und/oder die von der Steuervorrichtung zu steuernde Komponente entsprechend der Informationen zu konfigurieren.

Die Steuereinrichtung ist dazu ausgebildet, die von der Steuervorrichtung zu steuernde Komponente unter Verwendung der empfangenen Steuerdaten zu steuern.

Der Transponder kann dazu ausgebildet sein, eine zumindest dem Transponder zugeordnete Identifizierungs-Information an das mobile Sendegerät zu senden und mit der Identifizierungs-Information verknüpften Daten von dem mobilen Sendegerät zu empfangen, wobei die Steuerungseinrichtung dazu ausgebildet sein kann, die empfangenen Daten erst nach einer erfolgreichen Prüfung der mit den empfangenen Daten verknüpften Identifizierungs-Information zu verwenden.

Der Transponder kann ein RFID-Transponder oder ein NFC-Transponder sein.

Die Steuerungseinrichtung kann dazu ausgebildet sein, aktuell verwendete Steuerdaten, Informationen über aktuell gesetzte Konfigurierungen der Steuervorrichtung und/oder der von der Steuervorrichtung zu steuernden Komponente, eine aktuelle Netzwerkadresse der Steuervorrichtung und/oder Funktionsfehler der Steuervorrichtung und/oder der Komponente zu bestimmen und in einem Speicher des Transponders zu speichern, wobei der Transponder die gespeicherten Steuerdaten, Informationen und/oder die gespeicherte Netzwerkadresse an das mobile Sendegerät übertragen kann. Dies ermöglicht eine Konfiguration, Wartung oder Fehlersuche der Komponente oder der Steuervorrichtung nach der Inbetriebnahme vor Ort.

Alternativ oder zusätzlich können voreingestellte Steuerdaten, voreingestellte Konfigurierungen der Steuervorrichtung und/oder der von der Steuervorrichtung zu steuernden Komponente und/oder eine voreingestellte Netzwerkadresse der Steuervorrichtung in dem Speicher des Transponders z.B. vom Hersteller abgelegt sein, so dass diese vor der Inbetriebnahme ausgelesen, dokumentiert, überprüft und ggf. geändert werden können. Es ist auch möglich, in dem Transponder Ersatzteilnummern zu speichern.

Das mobile Sendegerät kann Mittel zum Empfangen von Daten mit einem für die Datenübertragung an den Transponder der Steuervorrichtung inkompatiblen Kommunikationsprotokoll und ein Gateway zum Umsetzen des inkompatiblen Kommunikationsprotokolls in ein für die Datenübertragung an den Transponder der Steuervorrichtung kompatibles Kommunikationsprotokoll aufweisen, wobei die Steuereinheit dazu ausgebildet sein kann, die von dem Gateway konvertierten Daten als zu sendende Daten zu bestimmen. Hiermit ist es möglich, Daten von mit unterschiedlichen Kommunikationsprotokollen arbeitenden Geräten (PC oder Mobiltelefon) über das mobile Sendegerät zu dem Transponder bzw. der Steuervorrichtung zu übertragen. Die Bedienung kann dann bequem am PC, Smartphone oder Tablet PC erfolgen.

Die Steuereinheit dazu kann ausgebildet sein, nach einer erfolgreichen Übertragung einer Adressierungs-Information an den Transponder der Steuervorrichtung automatisch eine neue Adressierungs-Information mit einer neuen Netzwerkadresse für eine Übertragung der neuen Adressierungs-Information an den Transponder einer anderen Steuervorrichtung zu erzeugen. Die erfolgreiche Übertragung kann dem Sendegerät von dem Transponder bekanntgegeben werden.

Zusätzlich kann das Sendegerät dazu ausgebildet sein, von dem Transponder für die Steuerung der Komponente aktuell gesetzte Steuerdaten, Informationen über aktuell gesetzte Konfigurierungen der Steuervorrichtung und/oder über aktuell gesetzte Konfigurierungen der von der Steuervorrichtung zu steuernden Komponente, eine aktuelle Netzwerkadresse und/oder Funktionsfehler der Steuervorrichtung oder der Komponente zu empfangen oder abzufragen.

Die Steuereinheit kann dazu ausgebildet sein, eine Daten-Kopieroperation auszuführen, bei der zumindest die von dem Transponder empfangenen oder abgefragten Steuerdaten und/oder Informationen als an den Transponder einer anderen Steuervorrichtung zu sendende Daten von der Steuereinheit bestimmt werden. Hiermit ist es möglich, auf einfache und schnelle Weise eine neue Steuervorrichtung zu konfigurierten, welche eine alte, defekte Steuervorrichtung ersetzen soll.

Nachfolgend wird die Erfindung anhand der beiliegenden Zeichnungen näher erläutert. Es zeigen:
Fig. 1 ein erstes Ausführungsbeispiel eines Beleuchtungssystems mit einer Steuervorrichtung und einem
Sendegerät erster Ausführung gemäß der vorliegenden Erfindung,
Fig. 2 ein zweites Ausführungsbeispiel eines Beleuchtungssystems gemäß der vorliegenden Erfindung, und
Fig. 3 ein Ausführungsbeispiel eines weiteren Sendegeräts gemäß der vorliegenden Erfindung.

Komponenten mit gleichen Funktionen sind in den Figuren mit gleichen Bezugszeichen gekennzeichnet.

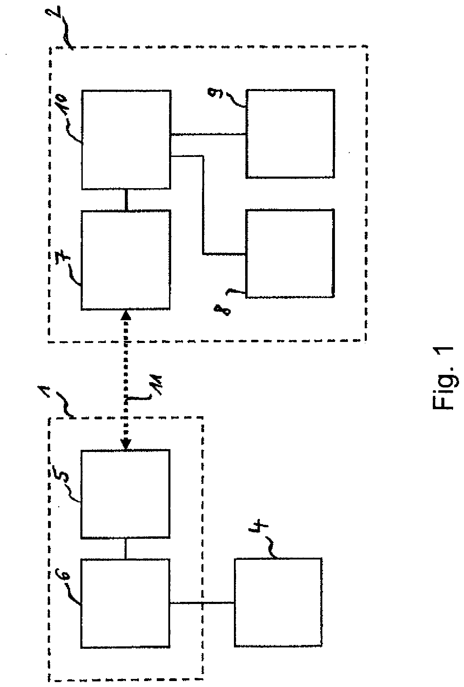

Fig. 1 zeigt eine vereinfachte schematische Darstellung eines Beleuchtungssystems mit einer Steuervorrichtung 1 und einem mobilen Sendegerät 2 insbesondere zur Vergabe von Netzwerkadressen gemäß der vorliegenden Erfindung. Die Steuervorrichtung 1 ist insbesondere ein Betriebsgerät zum Betreiben eines Leuchtmittels 4.

Das Leuchtmittel 4 kann eine Leuchtdiode (LED) oder mehrere LEDs umfassen. Die LEDs können anorganische oder organische LEDs sein. Die mehreren LEDs können in Serie oder parallel geschaltet sein. Die mehreren LEDs können auch in komplexeren Anordnungen verschaltet sein, beispielsweise in mehreren zueinander parallel geschalteten Reihenschaltungen.

Die Steuervorrichtung 1, also im dargestellten Beispiel das Betriebsgerät, kann ein Konstantstrom-Konverter, z.B. ein LED-Konverter sein, der aus einer Netzspannung (nicht gezeigt) einen für den Betrieb der LEDs nötigen Strom erzeugt, wenn er am Netz angeschlossen ist.

Die Steuervorrichtung 1 weist einen Transponder 5 und eine Steuerungseinrichtung 6 auf. Der Transponder 5 kann ein RFID-Transponder, insbesondere ein auf der RFID-Technologie basierender NFC-Transponder sein, der ein spezielles Kopplungsverfahren nutzt, dass auf gesonderte Frequenzbereiche und eine Kommunikation auf kurze Entfernung genormt ist. Der Transponder 5 kann ein passiver Transponder, der von dem Sendegerät 2 aus für eine Kommunikation mit Energie versorgt wird. In dem Transponder 5 können Daten in einem nicht flüchtigen, wiederbeschreibbaren Speicher gespeichert werden, die über die Verbindung 11 nur gelesen werden können (R/O) sowie Daten, die über die Verbindung 11 sowohl gelesen als auch überschrieben/geändert werden können (R/W).

Die Steuerungseinrichtung 6 kann mit dem Transponder 5 über einen seriellen Datenbus I²C (Inter-Integrated Circuit) verbunden sein und kann eine integrierte Halbleiterschaltung sein oder eine integrierte Halbleiterschaltung umfassen. Die Steuerungseinrichtung 6 kann als ein Prozessor, ein Mikroprozessor, ein Controller, ein Mikrocontroller oder eine anwendungsspezifische Spezialschaltung (ASIC) oder eine Kombination der genannten Einheiten ausgestaltet sein.

Das Sendegerät 2 dient dazu, die Steuervorrichtung 1 kontaktlos zu konfigurieren/parametrieren und Werte (Steuerdaten) auszulesen. Das Sendegerät 2 weist eine Sende- und Empfangseinheit 7 zum Senden und Empfangen von Daten zu/von dem Transponder 5, eine Anzeigeeinheit 8 zum Anzeigen der zu sendenden und/oder empfangenen Daten, eine Eingabeeinheit 9 zum Eingeben, Ändern und/oder Auswählen der Daten und eine mit der Sende- und Empfangseinheit 7, der Anzeigeeinheit 8 und der Eingabeeinheit 9 verbundene Steuereinheit 10 auf. Die Eingabeeinheit 9 kann in der Anzeigeeinheit 8 integriert sein (berührungsempfindlicher Bildschirm). Für den mobilen Einsatz ist das Sendegerät 2 mit einer internen Batterie (nicht gezeigt) ausgerüstet. Diese liefert auch die Energie für den Transponder 5, so dass Lese- und Schreibvorgänge auch ausgeführt werden können, wenn die Steuervorrichtung 1 nicht mit einer Netzspannung versorgt ist und auch selbst keine eigene Stromquelle besitzt.

Die Sende- und Empfangseinheit 7 stellt zu dem Transponder 5 eine drahtlose Verbindung 11 her. Für eine solche Kopplung/Verbindung erzeugt die Sende- und Empfangseinheit 7 magnetische Wechselfelder mit geringer Reichweite oder hochfrequente Radiowellen, wodurch der (passive) Transponder 5 mit Energie versorgt wird. Die Steuereinheit 10 ist ein Prozessor, auf dem eine Software (Mikroprogramm oder Anwendungssoftware, App) ausführbar ist, die den Lese- und Schreibprozess aber auch die Auswahl der zu übertragenden Daten steuert.

Über die drahtlose Verbindung 11 überträgt das Sendegerät 2 Daten für die Parametrierung/Konfiguration des Betriebsgeräts, welche in einem Speicher (nicht gezeigt) des Transponders 5 abgespeichert werden. Die Datenübertragung kann im stromlosen Zustand der Steuervorrichtung 1 erfolgen. Wird die Steuervorrichtung 1, zum Beispiel bei der Inbetriebnahme, mit Strom versorgt, liest die Steuerungseinrichtung 6 die gespeicherten Daten aus dem Speicher des Transponder 5 aus und parametriert/konfiguriert das Betriebsgerät entsprechend der ausgelesenen Daten.

Die Steuervorrichtung 1 und das Leuchtmittel 4 können in einem Gerät, zum Beispiel einer eine Batterie aufweisenden Notleuchte, intergiert sein. Notleuchten werden meist in Dauerschaltung (bei Netzbetrieb EIN) oder in Bereitschaftsschaltung (bei Netzbetrieb AUS, nur bei Stromausfall EIN) betrieben. Oft sind die Notleuchten auf Dauerschaltung voreingestellt.

Um von der standardmäßigen Dauerschaltung auf Bereitschaftsschaltung zu wechseln, muss, insbesondere bei nicht-netzwerkfähigen Leuchten oder solchen, die jedenfalls nicht in einem Netzwerk betrieben werden, in der Notleuchte normalerweise eine Drahtbrücke entfernt werden, was sehr zeitaufwändig und fehleranfällig ist.

Gemäß der vorliegenden Erfindung kann das Auswählen/Konfigurieren von Dauerschaltung oder Bereitschaftsschaltung mittels der Eingabeeinheit 9 des Sendegeräts 2 durch den Anwender erfolgen, wobei entsprechende Daten von der Steuereinheit 10 erzeugt und von der Sende- und Empfangseinheit 7 an den Transponder 5 gesendet werden. Eine solche Konfiguration kann mit dem Sendegerät 2 selbst bei einer Vielzahl von Notleuchten schnell erfolgen. Da die Datenübertagung auch im stromlosen oder ungeladenen Zustand der Notleuchte möglich ist, kann die Konfiguration an einem von dem beabsichtigten Montageort der Notleuchte verschiedenen Ort, zum Beispiel in einem Lager, mit einem stationären Sendegerät 2 durchgeführt werden.

Nach der Inbetriebnahme oder während des Betriebs kann die Steuerungseinrichtung 6 der Steuervorrichtung 1 die aktuell gesetzten Steuerdaten (Betriebsparameter) in dem Speicher des Transponders 5 abspeichern. Die Sende- und Empfangseinheit 7 kann die gespeicherten Steuerdaten ggf. auch im ausgeschalteten Zustand der Steuerungseinrichtung 6 auslesen und, wenn nötig, ändern. Die Steuereinheit 10 zeigt hierzu die empfangenen Steuerdaten auf der Anzeigeeinheit 8 an und führt ggf. Änderungen an den angezeigten Steuerdaten entsprechend der mittels der Eingabeeinheit 9 von einem Nutzer empfangenen Eingaben aus. Die geänderten oder neu gesetzten Steuerdaten werden über die aufgebaute Verbindung 11 zu dem Transponder 5 übertragen und in diesem gespeichert. Die Steuerungseinrichtung 6 fragt die neuen Steuerdaten von dem Transponder ab und verwendet sie.

Zur Erhöhung der Sicherheit, insbesondere, damit keine unbefugten Personen Daten an die Steuervorrichtung 1 senden oder abfragen können, kann vor der Datenübertragung eine gegenseitige Authentifizierung durchgeführt werden.

Es ist auch möglich zumindest einige der zu übertragenden Daten zu verschlüsseln bzw. mit verschiedenen Schlüsseln zu verschlüsseln. Diese müssen dann von der Steuervorrichtung 1 bzw. dem Sendegerät 2 entschlüsselt werden.

Bei der Verschlüsselung können diversifizierte Schlüssel verwendet werden. Dabei wird ein privater Schlüssel mit einer eindeutigen ID (z.B. der Seriennummer des Transponders) verknüpft und damit ein diversifizierter privater Schlüssel erzeugt. Dies hat den Vorteil dass, wenn der diversifizierte Schlüssel geknackt wird, nur der Code für ein Gerät offenliegt.

Alternativ oder zusätzlich können verschiedenen Daten unterschiedliche Berechtigungen für eine Änderung zugewiesen werden, so dass nur bestimmte Personen bzw. bestimmte Sendegeräte 2 bestimmte Konfigurationen/Adressierungen ändern oder setzen können. Hierfür werden zumindest einige der Daten in unterschiedliche Berechtigungsklassen eingeteilt und eine eine Befugnis für bestimmte Berechtigungsklassen anzeigende Berechtigungsinformation von dem Sendegerät 2 an den Transponder 5 übermittelt. Die Steuerungseinrichtung 6 bestimmt die Klasse oder Klassen der empfangenen Steuerdaten und prüft die Befugnis für die bestimmte Klasse oder Klassen mittels der empfangenen Berechtigungsinformation, wobei nur die Steuerdaten verwendet werden, welche einer Berechtigungsklasse entsprechen, für die eine Befugnis entsprechend der Berechtigungsinformation vorliegt. Alternativ können die Steuerdaten entsprechend ihrer jeweiligen Berechtigungsklasse von der Steuerungseinrichtung 6 und/oder der Steuereinheit 10 verschlüsselt werden.

Die vorliegende Erfindung kann besonders vorteilhaft bei der Vergabe einer Adresse an eine zu vernetzende Komponente wie z.B. einer Leuchte mit Betriebsgerät eines Beleuchtungssystems eingesetzt werden. Damit die Komponenten eines Beleuchtungssystems untereinander und/oder mit einer zentralen Steuereinheit während der Initialisierung und/oder des Betriebs Daten übertagen können, benötigt jede Komponente eine Netzwerkadresse. Diese Adresse kann gemäß der vorliegenden Erfindung auf einfache Weise vor der Inbetriebnahme der jeweiligen Komponenten vergeben werden.

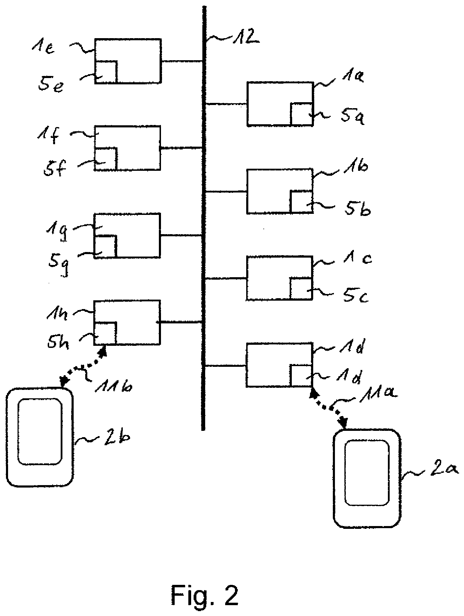

Fig. 2 zeigt in einem Ausschnitt ein zweites Ausführungsbeispiel eines Beleuchtungssystems gemäß der vorliegenden Erfindung. Das in Fig. 2 gezeigte Beleuchtungssystem enthält zwei Sendegeräte 2a, 2b und eine Vielzahl von Komponenten 1a..1h, die Sensoren, Leuchten oder Aktoren, Schalter und/oder Dimmer sein können und über ein Bussystem 12 miteinander verbindbar sind.

Jede Komponente 1a..1h weist einen Transponder 5a..5h, der mit den Sendegeräten 2a und 2b Daten austauschen kann und eine Steuerungsvorrichtung 1 (nicht gezeigt) zum Steuern der jeweiligen Komponente 1a..1h auf. Es ist auch möglich, dass eine gemeinsame Steuerungsvorrichtung 1 mehrere Komponenten 1a..1h steuert.

Die Sendegeräte 2a und 2b werden in dem gezeigten Beispiel dazu verwendet, den Komponenten 1a..1h ihre Adressen zu vergeben, damit sie über das Bussystem 12 ansprechbar sind, wobei mit dem Sendegerät 2a die Komponenten 1a..1h auch konfiguriert/parametriert werden. Hierzu sind den Sendegeräten 2a und 2b unterschiedliche Befugnisse zugeteilt. Beide Sendegeräte 2a, 2b sind befugt Daten mit Informationen zur Adressierung einer Steuervorrichtung 1/ Komponente 1a..1h zu übertragen, während z.B. nur das Sendegerät 2a befugt ist, Daten für die Konfiguration einer Steuervorrichtung 1/Komponente 1a..1h zu übertragen.

Die Adressierungs-Information gibt eine Netzwerkadresse an, mit der die von der Steuervorrichtung 1 zu steuernde Komponente 1a..1h gegenüber anderen Komponenten 1a..1h des Beleuchtungssystems und/oder einer Vorrichtung zur Konfiguration des Beleuchtungssystems (nicht gezeigt) zu identifizieren ist.

Die Adressierungs-Information kann vom Monteur/Elektriker in die Sendegeräte 2a, 2b eingegeben oder in diesen bereits gespeichert sein und vom Elektriker ausgewählt werden. Die Adressierungs-Information kann Informationen über den Standort/Position und/oder die Funktion der jeweiligen Komponente 1a..1h anzeigen bzw. enthalten oder mit solchen Positionsinformationen verknüpft werden, wie zum Beispiel: Schalter 1 im Raum 2 (=S1/R2) oder Leuchte im Raum 5, vorne rechts (=L/R5/VR), damit die Komponente 1a..1h später über eine zentrale Steuereinheit vom Elektriker für die Konfiguration, welcher Schalter welche Leuchte zu schalten hat, leichter zu identifizieren ist.

Ist die eingegebene oder ausgewählte Adressierungs-Information an den Transponder 5a..5h übertragen worden, kann diese Adressierungs-Information in dem Sendegerät 2a, 2b gelöscht oder für eine weitere Übertagung gesperrt werden, um eine doppelte Vergabe der Adresse zu verhindern. Hierzu könnte das die Adressierungs-Information übertragende Sendegerät 2a, 2b dem anderen Sendegerät 2a, 2b über eine Funkverbindung anzeigen, welche Adressierungs-Information bereits von ihm vergeben wurde.

Alternativ kann die zu vergebende Adressierungs-Information in einem Rechnernetz (Cloud) oder Server, auf das/den zumindest ein Sendegerät 2a, 2b zugreifen kann, gespeichert sein. Dieses Sendegerät 2a, 2b könnte auch als Smartphone ausgeführt sein. Dort läuft dann eine entsprechende Applikation und das Smartphone ist mit einer zum Transponder 5 kompatiblen Sendevorrichtung 7 ausgerüstet.

Bei größeren Beleuchtungssystemen muss der Monteur/Elektriker in einem Gebäudeplan dokumentieren, welche Leuchte er welcher Adresse zugewiesen hat. Dieser Schritt ist nötig, damit der Anwender/Benutzer die Leuchte beim Konfigurieren des Beleuchtungsrhythmus findet, die er gerne bedienen oder einrichten möchte. Das heißt auch, dass der Bediener neben dem Steuersystem auch den Gebäudeplan benötigt. Der Gebäudeplan kann auf den Sendegeräten 2a, 2b angezeigt oder mit Hilfe dieser erstellt werden. Es ist auch möglich, dass der Gebäudeplan mit einer entsprechenden Benutzeroberfläche aus dem Rechnernetz (Cloud) oder von dem Server zu dem Sendegerät 2a, 2b (Smartphone) übertragen wird. Durch entsprechendes Antippen des auf der Anzeigeeinheit 8 (berührungsempfindlicher Bildschirm) dargestellten Gebäude-/Raumplans kann der Elektriker die Position markieren, an der sich die Komponente 1a..1h (Leuchte, Schalter oder Bewegungsmelder), der gerade eine Netzwerkadresse zugewiesen wird, befindet. Nach der Übertragung der Adressierungs-Information an den Transponder 5a..5h wird die Adressierungs-Information mit der durch Antippen eingegebenen Position verknüpft und gespeichert. Somit wird automatisch ein grafisches Anlagenabbild in einem bestehenden Gebäudeplan erreicht.

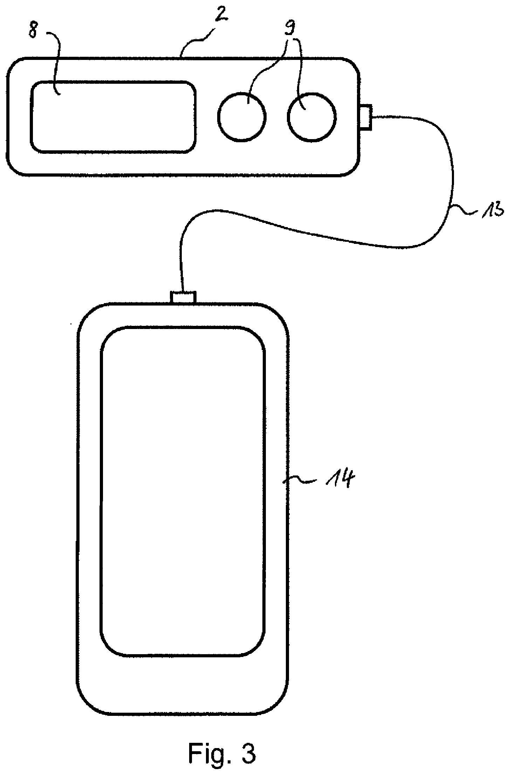

Das Sendegerät 2a, 2b kann gleichzeitig als mobiles Bediengerät dienen. Hierzu kann der Benutzer über ein entsprechendes Login auf das in dem Rechnernetz (Cloud) oder in dem Server abgelegte Anlagenabbild zugreifen und die Beleuchtung direkt ansteuern. Bei einer solchen Funktionalität ist es vorteilhaft, wenn das Sendegerät als Smartphone ausgeführt ist oder über ein solches betrieben wird, wie nachfolgend unter Bezugnahme auf Figur 3 erläutert wird.

Tippt der Benutzer in einer grafischen Benutzeroberfläche eine dort in einem Plan dargestellte Komponente 1a..1h, wie eine Leuchte an, wird z.B. ein Slider angezeigt, mit dem Helligkeit oder Farbtemperatur einstellbar sind. Nach der Eingabe/Änderung der Helligkeit bzw. Farbtemperatur, sendet Sendegerät 2a, 2b drahtlos den Stellbefehl mit der zugehörigen Adresse (Adressierungs-Information) entweder über einen Router an einen Controller (drahtgebundenes Lichtmanagementsystem) oder direkt an die Leuchte (wireless-System).

Für eine Bestimmung der Positionen der Komponenten 1a..1h für eine Zuordnung der Adressierungs-Informationen können die Sendegeräte 2a, 2b GPS-Empfänger aufweisen.

Zusätzlich können, da im gebäudeinneren GPS-Signale meist nicht zur Verfügung stehen, in den Sendegeräten 2a, 2b Sensoren für eine Ermittlung einer Position des Geräts in Gebäuden (Indoor Positioning), wie Beschleunigungssensoren und Gyroskope auf Mikrosystem-Basis (micro-electromechanical systems, MEMS) verwendet werden. Das letzte zur Verfügung stehende GPS-Signal kann dabei als Ausgangsposition mit den Daten der Mikroelektronik-Sensoren während der Bewegung verknüpft werden, um genaue Positionsdaten zu ermitteln. Die dafür nötige Sensorik ist meist in Mobiltelefonen (Smartphone) immer öfter bereits enthalten.

Das mit dem oben beschrieben Positionssensor ausgestattete Sendegerät 2a, 2b erfasst fortwährend die Position des Elektrikers bzw. des von ihm mitgeführten Geräts im Gebäude und sendet die Adressierungs-Information zusammen mit der ermittelten Sende-/Komponentenposition an den Transponder 5a..5h. Die in dem Transponder 5a..5h gespeicherten Daten können während der Inbetriebnahme dann an eine zentrale Steuereinheit des Beleuchtungssystems ausgelesen werden. Eine entsprechende Software kann dann aus diesen Daten automatisch ein grafisches Anlagenabbild erstellen, bei dem jede Komponente 1a..1h in einem Gebäude/Raum in der richtigen Position angeordnet ist.

Zusätzlich kann das grafische Anlagenabbild von dem Sendegerät 2a, 2b erstellt und angezeigt werden.

Fig. 3 zeigt ein weiteres Ausführungsbeispiel eines Sendegeräts 2 gemäß der vorliegenden Erfindung. Das Sendegerät 2 weist wiederum die Anzeigeeinheit 8, welche ein kostengünstiges zweizeiliges LCD-Display mit einer 2x7-Segment-Anzeige sein kann, und die Eingabeeinheit 9 mit zwei Tasten auf. Mit der Eingabeeinheit 9 kann eine gewünschte Adresse oder Konfiguration eingestellt oder ausgewählt werden, welche an den Transponder 5 zu übertragen ist. Die Übertragung wird einfach dadurch ausgelöst, dass das Sendegerät 2 in Empfangsreichweite des Transponders 5 gebracht wird. Das Sendegerät 2 ist somit sehr kompakt und könnte in ein anderes Gerät, wie eine kleine Taschenlampe, integriert werden. Umgekehrt ist auch die Integration einer LED z.B. möglich, so dass das Sendegerät um ein Taschenlampenfunktion erweitert wird.

Mit einer Schnittstelle (z.B. Mikro-USB oder Lightning Interface) ist das Sendegerät 2 über eine Kabelverbindung 13 mit einem Schreibe- und Lesegerät 14, das ein Smartphone oder Tablet sein kann, verbindbar. Über diese Verbindung kann das Sendegerät 2 an einen Transponder 5 zu übertragende Daten empfangen und aus einem Transponder 5 ausgelesene Daten an das Schreibe- und Lesegerät 14 senden. Die Datenübertragung zwischen dem Schreibe- und Lesegerät 14 und dem Sendegerät 2 könnte auch über eine Funkverbindung (z.B. Bluetooth) erfolgen.

Das Sendegerät 2 dient in diesem Fällen als Gateway, welches eine Datenübertragung zwischen dem Transponder 5 und dem Schreibe- und Lesegerät 14, das selbst keine Daten an den Transponder 5 senden oder von ihm empfangen kann, ermöglicht. Das Sendegerät 2 kann Mittel zum Umsetzen einer Vielzahl von inkompatiblen Kommunikationsprotokollen in ein für die Datenübertragung an den Transponder 5 kompatibles Kommunikationsprotokoll aufweisen, so dass unterschiedliche Schreibe- und Lesegeräte 14 mittels des Sendegeräts 2 mit dem Transponder 5 verbindbar sind.

Das Schreibe- und Lesegerät 14 hat ein größeres Display und kann das oben beschriebenen Anlagenabbild erzeugen und darstellen. Bei Verwenden der in der Figur 3 dargestellten Konfiguration kann insbesondere die vollständige Bedienung über das Schreibe- und Lesegerät 14 erfolgen. Dieses ist hierzu mit einer entsprechenden Software ausgestattet.

Das Sendegerät 2 oder das Schreibe- und Lesegerät 14 kann dazu ausgebildet sein, Informationen über Funktionsfehler der Komponente 1a..1h, welche von der Steuerungseinrichtung 6 erfasst und in dem Transponder 5 gespeichert wurden, abzufragen. In dem Transponder 5 können zudem Ersatzteilnummern hinterlegt sein.

Oft werden bei den Komponenten 1a..1h eines Beleuchtungssystems Fehler und die Information, welches Bauteil defekt ist, nur über ein Blinkmuster der Status-LED angezeigt, so dass der Fehlertyp oder das Bauteil nur über ein Datenblatt entziffert werden kann, das aber vor Ort meist nicht verfügbar ist. Auch muss die passende Ersatzteil-Artikelnummer erst nachgeschlagen oder beim zuständigen Vertriebsmitarbeiter angefragt werden.

Sind in dem Transponder 5 die oben genannten Informationen gespeichert, kann das Sendegerät 2 oder das Schreibe- und Lesegerät 14 diese auch bei einem Defekt/Stromausfall auslesen und das richtige Ersatzteil ermitteln. Über eine weitere Verbindung kann das Datenblatt des Ersatzteils ermittelt und/oder Vertriebskontakt zur Bestellung hergestellt werden.

Wird eine defekte Komponente 1a..1h ausgetauscht, müssen die Adresse und andere Einstellungen, wie Schaltungsart, Dimmlevel, Start der Funktionstests usw., auf die neue Komponente 1a..1h übertragen werden. Gemäß einem Ausführungsbeispiel der vorliegenden Erfindung sind zumindest einige der zu übertragenden Daten in dem Transponder 5 gespeichert und das Sendegerät 2 weist eine Daten-Kopierfunktion auf, mit der die gespeicherten Daten auf die neue Komponente 1a..1h bzw. deren Transponder 5 übertragen werden können.

Die beschriebenen Ausgestaltungen, wie zum Beispiel die Verschlüsselung oder Authentifizierung, sind nicht auf das jeweilige Ausführungsbeispiel beschränkt und können auch auf andere der beschriebenen Ausführungsbeispiele angewendet werden.

## Patentansprüche

1. Beleuchtungssystem aufweisend zumindest eine Steuervorrichtung (1) für eine Komponente (1a..1h) des Beleuchtungssystems und ein mobiles Sendegerät (2) zum Senden von Daten an die Steuervorrichtung, wobei
- die Steuervorrichtung (1)
einen Transponder (5), der dazu ausgebildet ist, zumindest im ausgeschalteten Zustand der Steuervorrichtung (1) Daten von dem mobilen Sendegerät (2) zu empfangen und zu speichern; und
eine Steuerungseinrichtung (6), die dazu ausgebildet ist, die in dem Transponder (5) gespeicherten Daten zumindest nach dem Einschalten der Steuervorrichtung (1) auszulesen und für die Steuerung der von der Steuervorrichtung (1) zu steuernden Komponente (1a..1h) zu verwenden, aufweist; und
- das mobile Sendegerät (2) eine Steuereinheit (10) zum Bestimmen der an die Steuervorrichtung (1) zu sendenden Daten und
eine Sende- und Empfangseinheit (7) zum Senden der bestimmten Daten an den Transponder (5) der Steuervorrichtung (1) aufweist, wobei
die Daten zumindest eine Adressierungs-Information, welche eine Netzwerkadresse anzeigt, mit der die von der Steuervorrichtung (1) zu steuernde Komponente (1a..1h) in dem Beleuchtungssystem zu identifizieren ist, beinhalten, **gekennzeichnet durch**,
eine zentrale Steuereinheit, die dazu eingerichtet ist, ein grafisches Anlagenabbild des Beleuchtungssystems, in dem jede Komponente (1a..1h) des Beleuchtungssystems in ihrer jeweiligen Position angeordnet ist, zu erzeugen, wobei
das mobile Sendegerät (2) dazu ausgebildet ist, die Position des mobilen Sendegeräts (2) zu bestimmen und die Adressierungs-Information zusammen mit einer die bestimmte Position anzeigenden Positionsinformation an den Transponder (5) der Steuervorrichtung (1) zu senden und die Steuervorrichtung (1) dazu ausgebildet ist, während einer Inbetriebnahme die aus dem Transponder (5) ausgelesene Positions- und Adressierungs-Information an die zentrale Steuereinheit für die Erzeugung des grafischen Anlagenabbilds zu übermitteln.

2. Beleuchtungssystem nach Anspruch 1,
**dadurch gekennzeichnet, dass**
die Daten Informationen zur Konfiguration der Steuervorrichtung (1) selbst und/oder Informationen zur Konfiguration der von der Steuervorrichtung (1) zu steuernden Komponente (1a..1h) beinhalten; und
die Steuerungseinrichtung (6) dazu ausgebildet ist, die Steuervorrichtung (1) und/oder die von der Steuervorrichtung (1) zu steuernde Komponente (1a..1h) entsprechend der Informationen zu konfigurieren.

3. Beleuchtungssystem nach Anspruch 1 oder 2,
**dadurch gekennzeichnet, dass**
die Steuerungseinrichtung (6) dazu ausgebildet ist, die von der Steuervorrichtung (1) zu steuernde Komponente (1a..1h) unter Verwendung der empfangenen Daten zu steuern.

4. Beleuchtungssystem nach einem der Ansprüche 1 bis 3, **dadurch gekennzeichnet, dass**
der Transponder (5) dazu ausgebildet ist, eine zumindest dem Transponder (5) zugeordnete Identifizierungs-Information an das mobile Sendegerät (2) zu senden und mit der Identifizierungs-Information verknüpfte Daten von dem mobilen Sendegerät (2) zu empfangen; und
die Steuerungseinrichtung (6) dazu ausgebildet ist, die empfangenen Daten erst nach einer erfolgreichen Prüfung der mit den empfangenen Daten verknüpften Identifizierungs-Information zu verwenden.

5. Beleuchtungssystem nach einem der Ansprüche 1 bis 4,
**dadurch gekennzeichnet, dass**
der Transponder (5) ein RFID-Transponder oder ein NFC-Transponder ist.

6. Beleuchtungssystem nach einem der Ansprüche 1 bis 5, **dadurch gekennzeichnet, dass**
die Steuerungseinrichtung (6) dazu ausgebildet ist, aktuell verwendete Steuerdaten, Informationen über aktuell gesetzte Konfigurierungen der Steuervorrichtung (1) und/oder der von der Steuervorrichtung (1) zu steuernden Komponente (1a..1h) und/oder Funktionsfehler der Steuervorrichtung (1) und/oder der Komponente (1a..1h) zu bestimmen und in einem Speicher des Transponders (5) zu speichern; und
der Transponder (5) dazu ausgebildet ist, die gespeicherten Steuerdaten, Informationen und/oder Funktionsfehler an das mobile Sendegerät (2) zu übertragen.

7. Beleuchtungssystem nach einem der Ansprüche 1 bis 6, **dadurch gekennzeichnet, dass**
das mobile Sendegerät eine Anzeige (8) zum Anzeigen von zumindest einem Teil der bestimmten Daten und/oder eine Einrichtung (9) zum Eingeben oder Auswählen von Daten durch einen Anwender aufweist, wobei die Steuereinheit (10) dazu ausgebildet ist, die Daten entsprechend der durch den Anwender eingegebenen bzw. ausgewählten Daten zu bestimmen.

8. Beleuchtungssystem nach einem der Ansprüche 1 bis 7, **dadurch gekennzeichnet, dass**
das mobile Sendegerät eine Schnittstelle zum Empfangen von an den Transponder (5) der Steuervorrichtung (1) zu übertragenden Daten aufweist, wobei die Steuereinheit (10) dazu ausgebildet ist, die von der Schnittstelle empfangenen Daten als zu sendende Daten zu bestimmen.

9. Beleuchtungssystem nach einem der Ansprüche 1 bis 8, **dadurch gekennzeichnet, dass**
das mobile Sendegerät Mittel (13) zum Empfangen von Daten mit einem für die Datenübertragung an den Transponder (5) der Steuervorrichtung inkompatiblen Kommunikationsprotokolls; und
ein Gateway zum Umsetzen des inkompatiblen Kommunikationsprotokolls in ein für die Datenübertragung an den Transponder (5) der Steuervorrichtung (1) kompatibles Kommunikationsprotokoll aufweist, wobei
die Steuereinheit (10) dazu ausgebildet ist, die von dem Gateway konvertierten Daten als zu sendende Daten zu bestimmen.

10. Beleuchtungssystem nach einem der Ansprüche 1 bis 9, **dadurch gekennzeichnet, dass**
die Steuereinheit (10) dazu ausgebildet ist, nach einer erfolgreichen Übertragung einer Adressierungs-Information an den Transponder (5) der Steuervorrichtung (1) automatisch eine neue Adressierungs-Information mit einer neuen Netzwerkadresse für eine Übertragung der neuen Adressierungs-Information an den Transponder (5) einer anderen Steuervorrichtung (1) zu erzeugen.

11. Beleuchtungssystem nach einem der Ansprüche 1 bis 10,
**dadurch gekennzeichnet, dass**
das mobile Sendegerät (2) dazu ausgebildet ist, von dem Transponder (5) für die Steuerung der Komponente (1a..1h) aktuell gesetzte Steuerdaten, Informationen über aktuell gesetzte Konfigurierungen der Steuervorrichtung und/oder über aktuell gesetzte Konfigurierungen der von der Steuervorrichtung (1) zu steuernden Komponente (1a..1h), eine aktuelle Netzwerkadresse und/oder Funktionsfehler der Steuervorrichtung oder der Komponente (1a..1h) zu empfangen oder abzufragen.

12. Beleuchtungssystem nach einem der Ansprüche 1 bis 11,
**dadurch gekennzeichnet, dass**
die Steuereinheit (10) dazu ausgebildet ist, eine Daten-Kopieroperation auszuführen, bei der zumindest die von dem Transponder (5) empfangenen oder abgefragten Steuerdaten und/oder Informationen als an den Transponder (5) einer anderen Steuervorrichtung zu sendende Daten von der Steuereinheit (10) bestimmt werden.

13. Verfahren zum Übertragen von für eine Steuerung oder Konfiguration einer Komponente (1a..1h) eines Beleuchtungssystems von einer Steuervorrichtung (1) zu verwendenden Daten von einem mobilen Sendegerät (2) zu der die Komponente (1a..1h) steuernden Steuervorrichtung (1) mit den Schritten:
Empfangen und Speichern der von dem mobilen Sendegerät (2) gesendeten Daten (2) mittels eines Transponders (5) der Steuervorrichtung (1) während die Steuervorrichtung (1) ausgeschaltet ist; und
Auslesen der in dem Transponder (5) gespeicherten Daten durch eine Steuerungseinrichtung (6) der Steuervorrichtung (1) nach dem Einschalten der Steuervorrichtung (1), wobei die Daten zumindest eine Adressierungs-Information, welche eine Netzwerkadresse anzeigt, mit der die von der Steuervorrichtung (1) zu steuernde Komponente (1a..1h) in dem Beleuchtungssystem zu identifizieren ist, beinhalten,
**gekennzeichnet durch**,
Erzeugen eines grafischen Anlagenabbilds des Beleuchtungssystems durch eine zentrale Steuereinheit, in dem jede Komponente (1a..1h) des Beleuchtungssystems in ihrer jeweiligen Position angeordnet ist, wobei
das mobile Sendegerät (2) die Position des mobilen Sendegeräts (2) bestimmt und die Adressierungs-Information zusammen mit einer die bestimmte Position anzeigenden Positionsinformation an den Transponder (5) der Steuervorrichtung (1) sendet und die Steuervorrichtung (1) während einer Inbetriebnahme die aus dem Transponder (5) ausgelesene Positions- und Adressierungs-Information an die zentrale Steuereinheit für die Erzeugung des grafischen Anlagenabbilds übermittelt.

## Claims

1. Lighting system having at least one control apparatus (1) for a component (1a..1h) of the lighting system and having a mobile transmitter (2) for transmitting data to the control apparatus, wherein
- the control apparatus (1) has
a transponder (5) that is designed to receive and store data from the mobile transmitter (2) at least in the switched-off state of the control apparatus (1); and
a control device (6) that is designed to read out the data stored in the transponder (5) at least after switching on the control apparatus (1) and to use them for controlling the component (ia..ih) to be controlled by the control apparatus (1); and
- the mobile transmitter (2) has
a control unit (10) for determining the data to be transmitted to the control apparatus (1), and
a transmitting and receiving unit (7) for transmitting the determined data to the transponder (5) of the control apparatus (1), wherein
the data include at least one addressing information item indicating a network address, with which the component (1a..1h) to be controlled by the control apparatus (1) is to be identified in the lighting system,
**characterized by**
a central control unit configured to generate a graphical system image of the lighting system, in which each component (1a..1h) of the lighting system is arranged in its respective position, wherein
the mobile transmitter (2) is designed to determine the position of the mobile transmitter (2) and to transmit the addressing information together with position information indicating the determined position to the transponder (5) of the control apparatus (1), and the control apparatus (1) is designed to transmit during start-up the position information and addressing information read out from the transponder (5) to the central control unit for generating the graphical system image.

2. Lighting system according to Claim 1,
**characterized in that**
the data contain information for configuring the control apparatus (1) itself and/or information for configuring the component (1a..1h) to be controlled by the control apparatus (1); and
the control device (6) is designed to configure the control apparatus (1) and/or the component (1a..1h) to be controlled by the control apparatus (1) according to the information.

3. Lighting system according to Claim 1 or 2,
**characterized in that**
the control device (6) is designed to control the component (1a..1h) to be controlled by the control apparatus (1) using the received data.

4. Lighting system according to any one of Claims 1 to 3, **characterized in that**
the transponder (5) is designed to transmit identification information associated with at least the transponder (5) to the mobile transmitter (2) and to receive data linked to the identification information from the mobile transmitter (2); and
the control device (6) is designed to use the received data only after a successful check of the identification information linked to the received data.

5. Lighting system according to any one of Claims 1 to 4,
**characterized in that**
the transponder (5) is an RFID transponder or an NFC transponder.

6. Lighting system according to any one of Claims 1 to 5, **characterized in that**
the control device (6) is designed to determine currently used control data, information about currently set configurations of the control apparatus (1) and/or of the component (1a..1h) to be controlled by the control apparatus (1), and/or functional errors of the control apparatus (1) and/or of the component (1a..1h), and to store them in a memory of the transponder (5); and
the transponder (5) is designed to transmit the stored control data, information and/or functional errors to the mobile transmitter (2).

7. Lighting system according to any one of Claims 1 to 6, **characterized in that**
the mobile transmitter has a display (8) for displaying at least a portion of the determined data and/or a device (9) for inputting or selecting data by a user, wherein the control unit (10) is designed to determine the data according to the data that is input or selected by the user.

8. Lighting system according to any one of Claims 1 to 7, **characterized in that**
the mobile transmitter has an interface for receiving data to be transmitted to the transponder (5) of the control apparatus (1), wherein the control unit (10) is designed to determine the data received from the interface as data to be transmitted.

9. Lighting system according to any one of Claims 1 to 8, **characterized in that**
the mobile transmitter has means (13) for receiving data with a communication protocol that is incompatible with the data transmission to the transponder (5) of the control apparatus; and
a gateway for converting the incompatible communication protocol into a communication protocol that is compatible with the data transmission to the transponder (5) of the control apparatus (1), wherein
the control unit (10) is designed to determine the data converted by the gateway as data to be transmitted.

10. Lighting system according to any one of Claims 1 to 9, **characterized in that**
after successful transmission of addressing information to the transponder (5) of the control apparatus (1), the control unit (10) is designed to automatically generate new addressing information comprising a new network address for transmission of the new addressing information to the transponder (5) of another control apparatus (1).

11. Lighting system according to any one of Claims 1 to 10,
**characterized in that**
the mobile transmitter (2) is designed to receive or query control data currently set by the transponder (5) for controlling the component (1a..1h), information about currently set configurations of the control apparatus and/or about currently set configurations of the component (1a..1h) to be controlled by the control apparatus (1), a current network address and/or functional error of the control apparatus or of the component (1a..1h).

12. Lighting system according to any one of Claims 1 to 11,
**characterized in that**
the control unit (10) is designed to execute a data copy operation, with which at least the control data and/or information received or queried by the transponder (5) are determined by the control unit (10) as data to be transmitted to the transponder (5) of another control apparatus.

13. Method for transmitting data to be used by a control apparatus (1) for controlling or configuring a component (1a..1h) of a lighting system from a mobile transmitter (2) to the control apparatus (1) controlling the component (1a..1h), comprising the steps of:
receiving and storing the data (2) transmitted by the mobile transmitter (2) by means of a transponder (5) of the control apparatus (1) while the control apparatus (1) is switched off; and
reading the data stored in the transponder (5) by means of a control device (6) of the control apparatus (1) after the control apparatus (1) is switched on, wherein the data include at least one addressing information item indicating a network address, with which the component (1a..1h) to be controlled by the control apparatus (1) is to be identified in the lighting system,
**characterized by** generating a graphical system image of the lighting system by means of a central control unit, in which each component (1a..1h) of the lighting system is arranged in its respective position, wherein
the mobile transmitter (2) determines the position of the mobile transmitter (2) and transmits the addressing information together with position information indicating the determined position to the transponder (5) of the control apparatus (1), and during start-up,
the control apparatus (1) transmits the position information and addressing information read out from the transponder (5) to the central control unit for generating the graphical system image.

## Revendications

1. Système d'éclairage présentant au moins un dispositif de commande (1) pour un composant (1a..1h) du système d'éclairage et un appareil d'émission (2) mobile pour l'envoi de données au dispositif de commande, dans lequel
- le dispositif de commande (1)
présente un transpondeur (5), qui est conçu pour, au moins dans l'état éteint du dispositif de commande (1), recevoir et stocker les données de l'appareil d'émission (2) mobile ; et
un appareil de commande (6), qui est conçu pour lire les données stockées dans le transpondeur (5) au moins après la mise en marche du dispositif de commande (1) et pour les employer pour la commande du composant (1a..1h) à commander par le dispositif de commande (1) ; et
- l'appareil d'émission (2) mobile
présente une unité de commande (10) pour déterminer les données à envoyer au dispositif de commande (1) et
une unité d'émission et de réception (7) pour envoyer les données déterminées au transpondeur (5) du dispositif de commande (1), dans lequel
les données contiennent au moins une information d'adressage, qui indique une adresse réseau, avec laquelle le composant (1a..1h) à commander par le dispositif de commande (1) peut être identifié dans le système d'éclairage,
**caractérisé par**,
une unité de commande centrale, qui est conçue pour générer une image graphique de l'installation du système d'éclairage, dans laquelle chaque composant (1a..1h) du système d'éclairage est agencé dans sa position respective, dans lequel
l'appareil d'émission (2) mobile est conçu pour déterminer la position de l'appareil d'émission (2) mobile et pour envoyer l'information d'adressage conjointement avec une information de position indiquant la position déterminée au transpondeur (5) du dispositif de commande (1) et le dispositif de commande (1) est conçu pour, pendant une mise en service,
transmettre l'information d'adressage et l'information de position lues dans le transpondeur (5) à l'unité de commande centrale pour la génération de l'image graphique de l'installation.

2. Système d'éclairage selon la revendication 1,
**caractérisé en ce que**
les données contiennent des informations pour la configuration du dispositif de commande (1) lui-même et/ou des informations pour la configuration du composant (1a..1h) à commander par le dispositif de commande (1) ; et
l'appareil de commande (6) est conçu pour configurer le dispositif de commande (1) et/ou le composant (1a..1h) à commander par le dispositif de commande (1) conformément aux informations.

3. Système d'éclairage selon la revendication 1 ou 2,
**caractérisé en ce que**
l'appareil de commande (6) est conçu pour commander le composant (1a..1h) à commander par le dispositif de commande (1) en utilisant les données reçues.

4. Système d'éclairage selon l'une quelconque des revendications 1 à 3, **caractérisé en ce que**
le transpondeur (5) est conçu pour envoyer une information d'identification attribuée au moins au transpondeur (5) à l'appareil d'émission (2) mobile et pour recevoir, de la part de l'appareil d'émission (2) mobile, des données associées à l'information d'identification ; et
l'appareil de commande (6) est conçu pour n'utiliser les données reçues qu'après la vérification réussie de l'information d'identification associée aux données reçues.

5. Système d'éclairage selon l'une quelconque des revendications 1 à 4,
**caractérisé en ce que**
le transpondeur (5) est un transpondeur RFID ou un transpondeur NFC.

6. Système d'éclairage selon l'une quelconque des revendications 1 à 5, **caractérisé en ce que** l'appareil de commande (6) est conçu pour déterminer des données de commande réellement utilisées, des informations sur la configuration réellement définie du dispositif de commande (1) et/ou du composant (1a..1h) à commander par le dispositif de commande (1) et/ou un défaut de fonctionnement du dispositif de commande (1) et/ou du composant (1a..1h) et pour les stocker dans une mémoire du transpondeur (5) ; et
le transpondeur (5) est conçu pour transférer les données de commande, informations et/ou défaut de fonctionnement stockés à l'appareil d'émission (2) mobile.

7. Système d'éclairage selon l'une quelconque des revendications 1 à 6, **caractérisé en ce que**
l'appareil d'émission mobile présente un affichage (8) pour afficher au moins une partie des données déterminées et/ou un appareil (9) pour la saisie ou la sélection de données par un utilisateur, dans lequel l'unité de commande (10) est conçue pour déterminer les données conformément aux données saisies ou sélectionnées par l'utilisateur.

8. Système d'éclairage selon l'une quelconque des revendications 1 à 7, **caractérisé en ce que**
l'appareil d'émission mobile présente une interface pour la réception des données à transférer au transpondeur (5) du dispositif de commande (1), dans lequel l'unité de commande (10) est conçue pour déterminer les données reçues de l'interface comme les données à envoyer.

9. Système d'éclairage selon l'une quelconque des revendications 1 à 8, **caractérisé en ce que**
l'appareil d'émission mobile présente des moyens (13) pour la réception de données avec un protocole de communication incompatible pour le transfert de données au transpondeur (5) du dispositif de commande ; et
une passerelle pour transformer le protocole de communication incompatible en un protocole de communication compatible pour le transfert de données au transpondeur (5) du dispositif de commande (1), dans lequel
l'unité de commande (10) est conçue pour déterminer les données converties par la passerelle comme des données à envoyer.

10. Système d'éclairage selon l'une quelconque des revendications 1 à 9, **caractérisé en ce que** l'unité de commande (10) est conçue pour, après un transfert réussi d'une information d'adressage au transpondeur (5) du dispositif de commande (1), générer automatiquement une nouvelle information d'adressage avec une nouvelle adresse réseau pour un transfert de la nouvelle information d'adressage au transpondeur (5) d'un autre dispositif de commande (1).

11. Système d'éclairage selon l'une quelconque des revendications 1 à 10,
**caractérisé en ce que**
l'appareil d'émission (2) mobile est conçu pour recevoir ou demander des données de commande réellement utilisées par le transpondeur (5) pour la commande du composant (1a..1h), des informations sur la configuration réellement définie du dispositif de commande et/ou par l'intermédiaire de la configuration réellement définie du composant (1a..1h) à commander par le dispositif de commande (1), une adresse réseau réelle et/ou un défaut de fonctionnement du dispositif de commande ou du composant (1a..1h).

12. Système d'éclairage selon l'une quelconque des revendications 1 à 11,
**caractérisé en ce que**
l'unité de commande (10) est conçue pour réaliser une opération de copie de données, dans laquelle au moins les informations et/ou les données de commande reçues ou demandées du transpondeur (5) sont déterminées comme des données à envoyer au transpondeur (5) d'un autre dispositif de commande par l'unité de commande (10).

13. Procédé de transfert de données à utiliser pour une commande ou une configuration d'un composant (1a..1h) d'un système d'éclairage par un dispositif de commande (1) d'un appareil d'émission (2) mobile au dispositif de commande (1) du composant (1a..1h) à commander, comprenant les étapes de :
réception et stockage des données (2) envoyées par l'appareil d'émission (2) mobile au moyen d'un transpondeur (5) du dispositif de commande (1) pendant que le dispositif de commande (1) est éteint ; et
lecture des données stockées dans le transpondeur (5) par un appareil de commande (6) du dispositif de commande (1) après la mise en marche du dispositif de commande (1), dans lequel les données contiennent au moins une information d'adressage, qui indique une adresse réseau, avec laquelle le composant (1a..1h) à commander par le dispositif de commande (1) peut être identifié dans le système d'éclairage,
**caractérisé par**,
la génération d'une image graphique de l'installation du système d'éclairage par l'intermédiaire d'une unité de commande centrale, dans laquelle chaque composant (1a..1h) du système d'éclairage est agencé dans sa position respective, dans lequel
l'appareil d'émission (2) mobile détermine la position de l'appareil d'émission (2) mobile et envoie l'information d'adressage conjointement avec une information de position indiquant la position déterminée au transpondeur (5) du dispositif de commande (1) et le dispositif de commande (1), pendant une mise en service, transmet l'information d'adressage et l'information de position lues dans le transpondeur (5) à l'unité de commande centrale pour la génération de l'image graphique de l'installation.
